# EUROPEAN PATENT APPLICATION

(11) **EP 0 962 889 A2**
(43) Date of publication of application: **08.12.1999**
(21) Application number: 99201711.1
(22) Date of filing: 28.05.1999
(51) Int. Cl.: G06T 7/00

(54) **Method and apparatus for automating image quality test programs**

(30) Priority: 03.06.1998 US 89787
(71) Applicant: Agfa Corporation, Ridgefield Park, NJ 07660-2199 (US)
(72) Inventor: Boutselis, Kathleen M., Lowell, MA 01850 (US); Bloomquist, Donna R., Salem, MA 01970 (US)
(74) Representative: Van Ostaeyen, Marc Albert Jozef

(57) **Abstract**

A method and apparatus for automating image quality test programs in an imaging system. A script is used to replace specific information in a test file with variables to produce a normalized test file. Prior to rasterization and imaging, the variables in the normalized test file are replaced with test specific information. The process of replacing the variables, rasterizing the resultant file, and imaging the rasterized test file is repeated for each set of test specific information associated with an image quality test.

## Description

### FIELD OF THE INVENTION

The present invention is in the field of electronic prepress systems. More particularly, the present invention provides a method and apparatus for automating image quality test programs in an imaging system.

### BACKGROUND OF THE INVENTION

As known in the art, imaging systems commonly include, for example, an imagesetter, at least one raster image processor (RIP), and software for color management, screening, and other purposes. To ensure the quality of the images recorded by such imaging systems on recording media, many test pages, each typically including text and images, must be generated using a wide variety of tests and variable settings. The variables may include, for example, polarity, spot function, right/wrong reading, resolution, screen frequency, screen angles, screen type, page size, printing ink setup, ganging, and image file selection.

Currently, manual test programs are used to generate the test pages, wherein an operator is required to manually configure the imaging system for each individual test page to be generated. Unfortunately, this requires a great deal of operator interaction, which is time consuming and highly prone to errors.

### SUMMARY OF THE INVENTION

The present invention is directed to a method and apparatus for automating image quality test programs in an imaging system.

The present invention relates to a method having the specific features set out in claim 1 and to an apparatus having the specific features set out in claim 6. Specific features for preferred embodiments of the invention are set out in the dependent claims.

### BRIEF DESCRIPTION OF THE DRAWINGS

The features of the present invention will best be understood from a detailed description of the invention and a preferred embodiment thereof selected for the purposes of illustration and shown in the accompanying drawings in which:
FIG. 1 illustrates an example of an imaging system;
FIG. 2 illustrates a flowchart for a manual, prior art technique for testing the image quality of an imaging system;
FIG. 3 illustrates a flowchart depicting a method for automating image quality test programs in accordance with a preferred embodiment of the present invention; and
FIG. 4 illustrates a flowchart depicting a method for automating image quality test programs in accordance with an alternate embodiment of the present invention.

### DETAILED DESCRIPTION OF THE INVENTION

The features and advantages of the present invention are illustrated in detail in the accompanying drawings, wherein like reference numerals refer to like elements throughout the drawings.

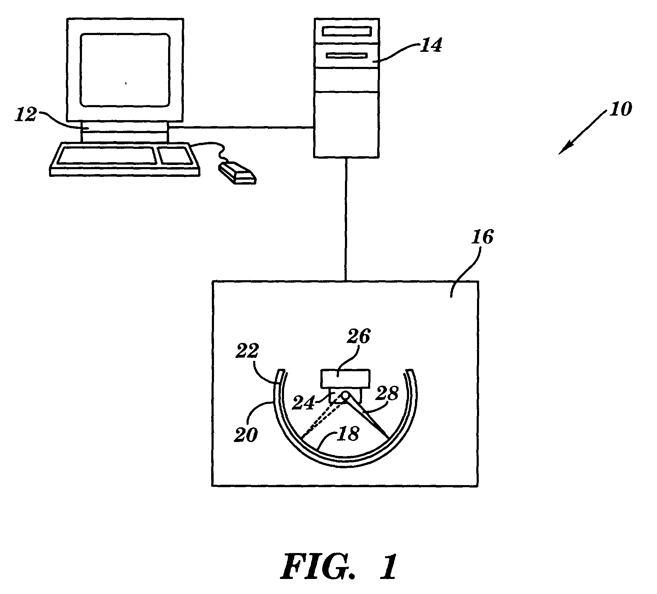

An example of an imaging system 10, in which the method and apparatus for automating image quality test programs of the present invention may be used, is illustrated in FIG. 1. In this example, the imaging system 10 includes an imagesetter configured to image digital data onto a supply of film or other recording media. Although described below with regard to an imagesetter, the present invention may be used in conjunction with a wide variety of other types of imaging systems, including platesetters, digital proofers, and the like, without departing from the intended scope of the present invention as set forth in the claims.

The imaging system 10 generally includes a front end computer, or workstation 12 for the design and layout of pages to be printed, a raster image processor (RIP) 14 for rasterizing the page data, and an imagesetter 16 for recording the digital data provided by the RIP onto a supply of recording media 18.

The imagesetter 16 in this example includes an internal drum 20 having a cylindrical imaging surface 22 for supporting the recording media 18 during imaging, and a scanning system 24, carried by a movable optical carriage 26, for recording digital data onto the recording media 18 using an imaging beam 28. Other types of imagesetters, such as external drum or capstan, may, of course, be used to record the digital data onto the recording media.

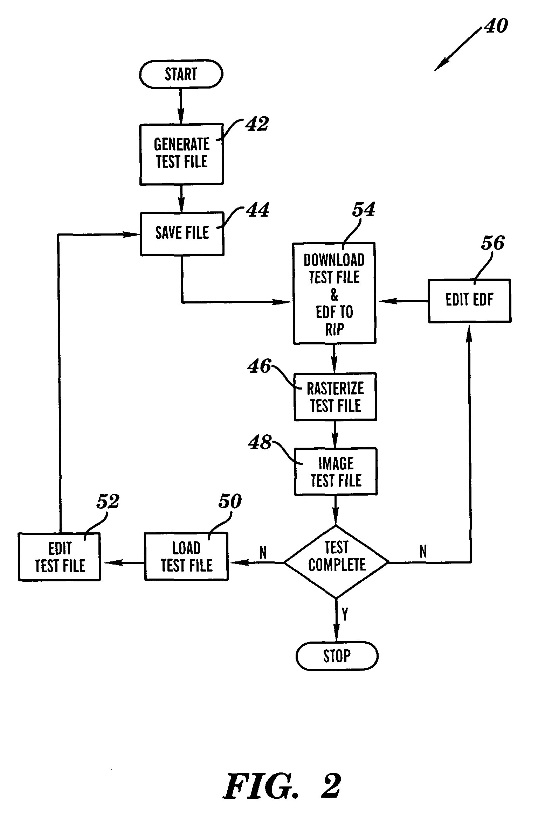

Referring now to FIG. 2, there is illustrated a flowchart 40 depicting a manual, prior art technique for testing the image quality of an imaging system, such as the imaging system 10 shown in FIG. 1.

In block 42, a test file containing images and/or text is produced on a workstation 12 using a page layout program, an imposition program, or other suitable software. The test file is typically saved 44 on a storage device in a page description language such as Postscript. During an image quality test, the test file is rasterized 46 by the RIP 14, and is imaged 48 by the imagesetter 16 based on test information provided by an operator. The test information may include both static test information applicable to an entire test suite, and test specific information which must be updated each time the test file is imaged. The static test information may include information such as the test name, date, ink setup, printer name, engine name, video, and the like. The test specific information, in the case of halftone screen testing, for example, may include ruling map information such as resolution, line ruling, and spot function. Of course, the test information may include other types of static and test specific information depending on the type of test being run as well as other factors. In the following description of the prior art and the present invention, the test specific information is limited to the ruling map information detailed above.

Generally, data regarding the static test information and the test specific information is imaged 48 onto the recording media as part of the test file. Accordingly, the test file must be updated each time the test specific information is updated during the testing procedure (e.g., when updated ruling map information is used). The operator performing the tests must therefore load 50 the previously saved test file, using whichever program was used to create it, manually edit 52 the test file to update the test specific information which is to be imaged along with the test file, and again save 44 the updated test file.

The saved test tile is provided 54 to the RIP 14 for rasterization 46 by a download program such as AgfaSet, available from the Agfa Division of Bayer Corporation, or in response to a print command from the application used to create the test file. The download program is additionally used to edit 56 and provide 54 an engine description file (EDF) to the RIP 14. As known in the art, the EDF is used to set the operational parameters of the imagesetter 16 for the print job, via the RIP 14, based on the test information described above. Once received by the RIP 14, the test file is rasterized 46, and is subsequently provided to the imagesetter 16 for imaging 48 in accordance with instructions set forth in the EDF. The EDF must also be manually edited 56 based on the revised test information, using the download program or other suitable means, each time the test file is updated during the testing procedure.

As described above, each time the test specific information is changed (e.g., different ruling map information is used), the test file and the EDF must be updated accordingly. This is a time consuming process which requires a great deal of operator interaction. Unfortunately, this greatly increases the likelihood that errors will be introduced into the testing process. Further, each of the updated test files must be individually downloaded to the RIP 14 for rasterization prior to imaging by the imagesetter 16. A typical image quality test suite, for example, wherein a test file is repeatedly imaged using a large number of different sets of ruling map information, may require several days to complete using the prior art image quality testing procedure described above with reference to FIG. 2.

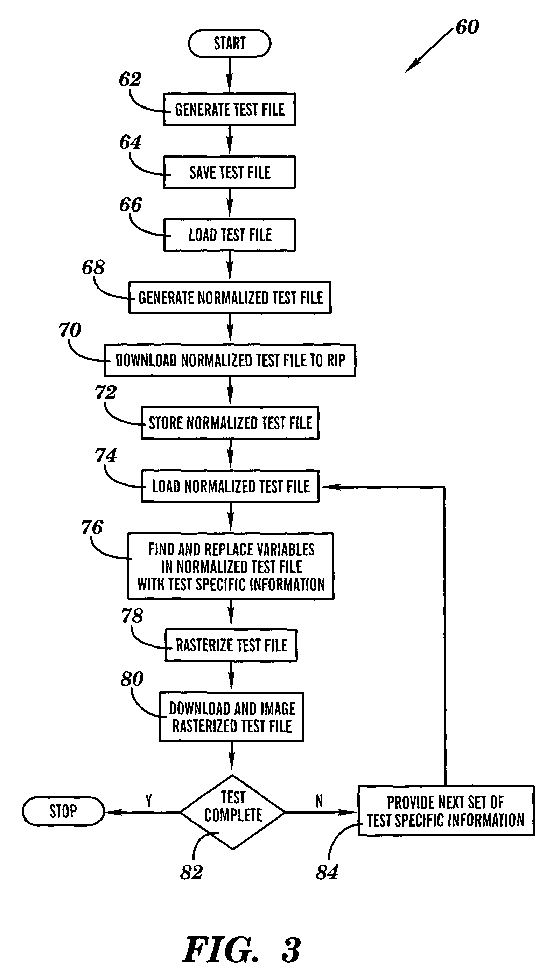

The present invention provides a method and apparatus for automating image quality test programs. Advantageously, the present invention drastically shortens the time required to perform an image quality test, reduces operator interaction, and substantially eliminates errors in the testing process. A flowchart 60 illustrating a method for automating image quality test programs in accordance with a preferred embodiment of the present invention is depicted in FIG. 3.

In block 62 of FIG. 3, a test file containing images and/or text is produced on a workstation 12 using suitable software. The test file is subsequently saved 64 on a storage device in a page description language such as Postscript. As in the prior art example of FIG. 2, the test information may include both static test information applicable to an entire test suite, and test specific information (i.e., ruling map information) which may be updated each time the test file is imaged.

The Postscript data corresponding to the test file is subsequently accessed 66 from the storage device, and edited 68 by a script running on the workstation 12, on the RIP 14, or on any other processor associated with the imaging system. The script is configured to find the text in the Postscript data corresponding to the test specific information, and to replace this text with variables, thereby generating a normalized test file.

The normalized test file is downloaded 70 to the RIP 14, and is stored 72 on a storage device. This single cached file is used each time the test file is imaged in accordance with different ruling map information or other test specific information during an image quality test. Thus, unlike the prior art testing technique described above, wherein the test file must be downloaded to the RIP 14 each time it and/or the EDF are updated, the normalized test file of the present invention is only required to be downloaded a single time, thereby greatly reducing the time and effort required to perform an image quality test.

A script is also provided to automatically load 74 the normalized test file from the storage device, and to automatically find and replace 76 the variables contained therein with test specific information. Again, this process may occur on the workstation 12, on the RIP 14, or on any other processor associated with the imaging system. The resultant test file containing the test specific information is then rasterized 78 by the RIP 14 to produce a rasterized test file. The test file is then automatically downloaded to, and imaged 80 by, the imagesetter 16. This procedure is automatically repeated 82, 84 by the script for each set of test specific information (e.g., for each different set of ruling map information) required for a given image quality test.

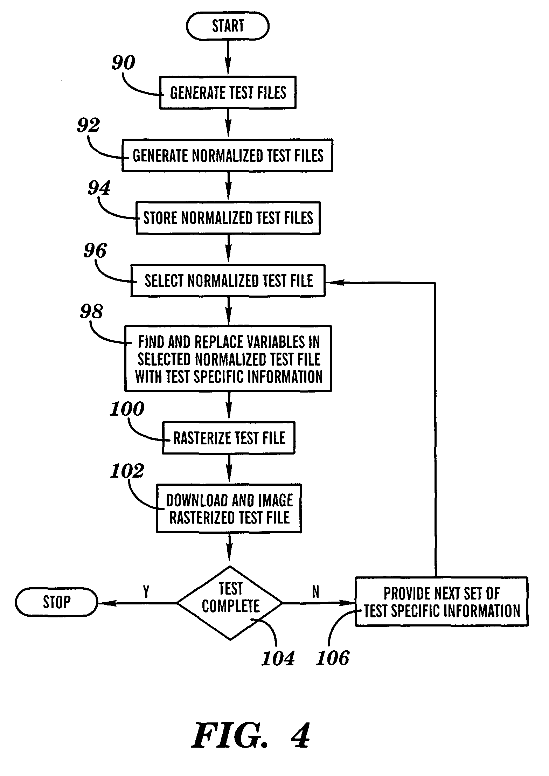

A plurality of different test files may be produced 90, normalized 92, and stored 94 on a storage device as illustrated in FIG. 4. An image quality test may be performed using one or more of the stored normalized test files. After selection 96 (manual or automatic) of one of the normalized test files from the storage device, a script is used to automatically find and replace 98 the variables contained in the selected normalized test file with test specific information. The resultant test file containing the test specific information is then rasterized 100 by the RIP 14 to produced a rasterized test file. The rasterized test file is then automatically downloaded and imaged 102 by imagesetter 16. This procedure is automatically repeated 104, 106 by the script using the selected normalized test file (or other stored normalized test file) in accordance with the requirements of the image quality test being performed.

The foregoing description of the present invention has been presented for purposes of illustration and description. It is not intended to be exhaustive or to limit the invention to the precise form disclosed, and many modifications and variations are possible in light of the above teaching.

## Claims

1. A method for automating an image quality test according to a plurality of sets of test specific information, comprising the steps of :
- generating (68) one or a plurality of normalized test files for the image quality test, the or each normalized test file containing at least one variable ;
- optionally selecting (96) one of the plurality of normalized test files, thereby identifying the normalized test file ;
- replacing (76, 98) said variable in the normalized test file with said test specific information from one of said sets, thereby generating a specific test file ;
- rasterizing (78, 100) said specific test file, thereby generating a rasterized test file ;
- imaging (80, 102) the rasterized test file ; and,
- automatically (82, 84, 104, 106) repeating the replacing, rasterizing, and imaging steps for each of said sets.

2. The method according to claim 1, wherein the step of generating (68) includes the steps of :
- generating one (62) or a plurality (90) of test files for the image quality test ; and,
- producing one or a plurality of normalized test files by replacing (92) specific information in the or each test file with said at least one variable.

3. The method according to any one of the preceding claims, further including the step of storing (72) the or each normalized test file for subsequent use in the replacing (76) step.

4. The method according to claim 3, wherein the or each normalized test file is stored in a raster image processor (RIP).

5. The method according to any one of the preceding claims, wherein said test specific information corresponds to ruling map information.

6. An apparatus for automating an image quality test comprising :
- a storage device for storing one or a plurality of normalized test files, having at least one variable ;
- an optional system for selecting one of said plurality of stored normalized test files, thereby identifying the normalized test file ;
- a system (10) for replacing said variable in said normalized test file with test specific information, thereby producing a specific test file ;
- a raster image processor (14) for rasterizing said specific test file, thereby producing a rasterized test file ; and,
- an imaging system (16) for imaging said rasterized test file.

7. The apparatus according to claim 6, comprising a plurality of sets of said test specific information wherein :
- the replacing system (10) is for automatically replacing said variable using sequentially each of said sets, thereby producing a plurality of specific test files ; and,
- the raster image processor (14) and the imaging system (16) are for sequentially rasterizing and imaging, respectively, each of said plurality of specific test files.

8. The apparatus according to any one of claims 6 to 7, wherein said raster image processor (14) is for storing the or each normalized test file.

9. The apparatus according to any one of claims 6 to 8, wherein said test specific information corresponds to ruling map information.
